Europäisches Patentamt

European Patent Office

Office européen des brevets

(11) Publication number: **0 319 169**
**A2**

# (12) EUROPEAN PATENT APPLICATION

(21) Application number: **88310861.5**

(22) Date of filing: **17.11.88**

(51) Int. Cl.⁴: **B23Q 1/00 , B29C 33/30**

(30) Priority: **03.12.87 GB 8728267**

(43) Date of publication of application:
**07.06.89 Bulletin 89/23**

(84) Designated Contracting States:
**AT BE CH DE ES FR GB GR IT LI LU NL SE**

(71) Applicant: **GRABOR PLASTICS LIMITED**
**Bulmer Road Industrial Estate**
**Sudbury Suffolk CO10 7HJ(GB)**

(72) Inventor: **Boram, Graham Leslie**
**c/o Bulmer Road Industrial Estate**
**Sudbury Suffolk CO10 7HJ(GB)**

(74) Representative: **Maguire, Peter Albert et al**
**P.A. Maguire & Co. 12, The Broadway**
**St. Ives Huntingdon Cambridgeshire PE17**
**4BN(GB)**

(54) **Improvements in or relating to machine tools.**

(57) The combination of a machine tool (11), a machine platen (1), and coupling means for releasably fixing the machine tool to the machine platen, characterised in that one straight edge (2) of the platen (1) is made to form a tool locating means, and characterised by means (13) on the tool for engagement with the tool locating edge (2) of the platen whereby the tool can be located on the platen, a member (12) rigidly fixed on, or integral with, the tool and defining a slot (16), a member (5) on the platen and arranged for engagement in the slot (16), and manually operable clamping means (30) on the platen and operatively coupled to the member (5) for drawing the member towards the platen to force the tool firmly into contact with the platen.

FIG.1.

## IMPROVEMENTS IN OR RELATING TO MACHINE TOOLS

The invention relates to machine tools and more particularly to coupling means for releasably securing machine tools to the platens of associated machines so that the machine tools can be used on the machines. Thus for example machine tools such as moulds in which plastics is injection or blow moulded or in which plastics is vacuum-formed are usually bolted to their associated platens on the plastics processing machinery. Since these moulds can be of different size depending on the article to be formed it is usually necessary to adapt the receiving platen, e.g. by boring suitable bolt holes in it so that the platen and mould can be coupled together. This involves the labour of skilled fitters and is time consuming not only in the initial setting up of the machine but also when moulds are to be changed.

It is an object of the invention to provide means for coupling such tools to their associated platens which is capable of a degree of standardisation so that less skilled labour is involved in setting up the machine and which may even be capable of being set up by unskilled or semi-skilled operatives.

According to the invention there is provided the combination of a machine tool, a machine platen, and coupling means for releasably fixing the machine tool to the machine platen, characterised in that one straight edge of the platen is made to form a tool locating means, and characterised by means on the tool for engagement with the tool locating edge of the platen whereby the tool can be located on the platen, a member rigidly fixed on, or integral with, the tool and defining a slot, a member on the platen and arranged for engagement in the slot, and manually operable clamping means on the platen and operatively coupled to the member for drawing the member towards the platen to force the tool firmly into contact with the platen. Preferably a groove is provided along the said one edge of the platen, and means is provided on the tool for engagement in the groove.

If desired an index mark may be provided on the engagement means of the tool, along with a corresponding index mark on the said one edge of the platen whereby the tool can be aligned on the platen.

The machine platen may be disposed with its face vertical, in which case the groove is preferably disposed in the top edge of the platen, whereby the tool can be hung under gravity on the platen.

A locating pin may be provided on the platen and arranged to project into the groove for engagement in a corresponding recess in the machine tool to locate the machine tool on the platen. Preferably the locating pin is in the form of spring loaded plunger.

An index plunger may be provided on the platen and arranged to project from the face of the platen and a corresponding recess may be provided on the tool whereby the plunger can engage in the recess in the tool to locate the tool on the platen.

The slot in the tool may be a dovetail slot, and the engagement member on the platen may be formed with a dovetail slot corresponding to the dovetail slot in the tool. The clamping means is preferably actuated by a manually operable lever.

The invention is diagrammatically illustrated by way of example in the accompanying drawings in which:-

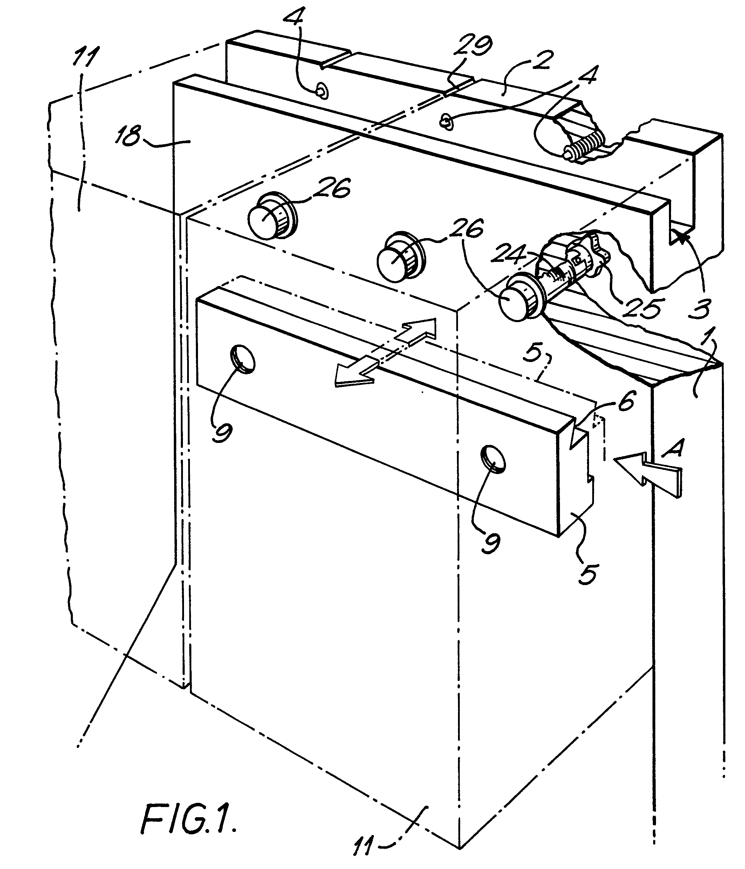

Figure 1 is a perspective view of a machine tool platen;

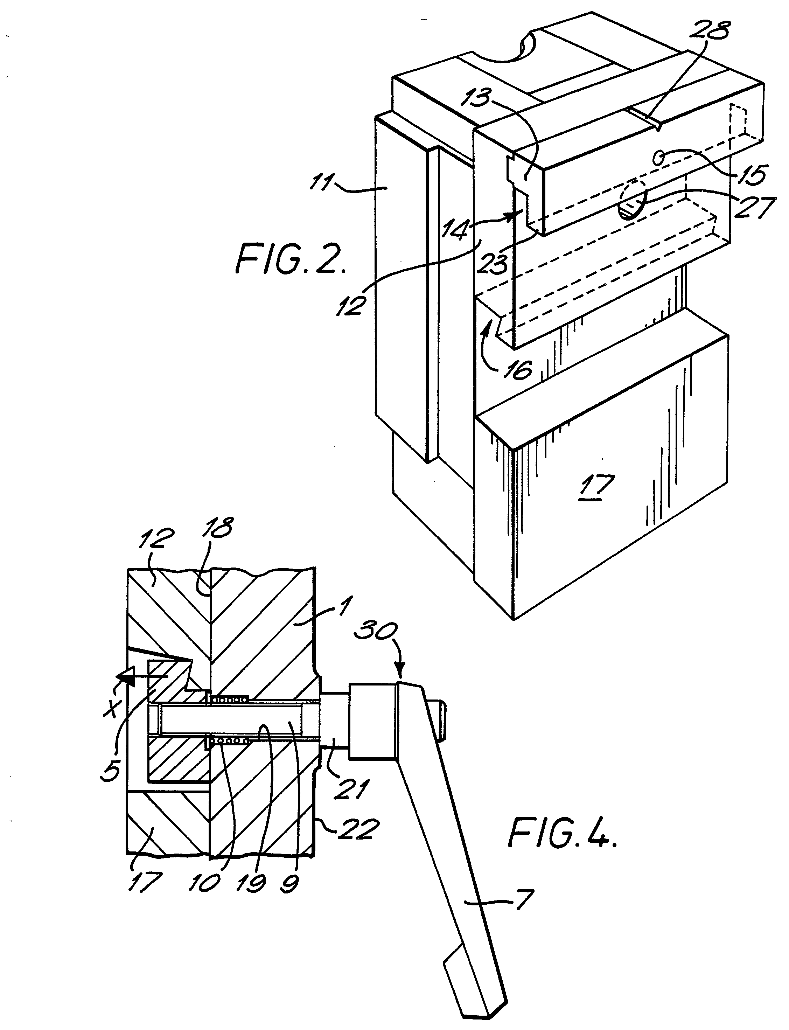

Figure 2 is a perspective view of a machine tool adapted for mounting on the platen of Figure 1;

Figures 3a and 3b illustrate machine tools of the kind shown in Figure 2 mounted on the platen of the kind shown in Figure 1, and

Figure 4 is a cross-section taken in the direction of the arrow A of Figure 1.

In the drawings there is shown a generally plate-like platen 1 of a plastics processing machine such as a blow moulding machine which is arranged in use with its face 18 generally vertically disposed. The top edge 2 of the platen 1 is horizontal and straight and forms a locating means for a machine tool 11, in this case a mould. Along its top edge 2 the platen is formed with a groove or slot 3 into which project a series of spring loaded detent pins 4.

The flat face 18 of the platen is adapted to receive the mould 11. A bar-like clamping rail 5 is carried in a generally horizontal disposition by the platen 1 in front of the face 18 of the platen and the clamping rail 5 is formed along its length with a dovetail groove 6. The clamping rail is carried by the platen 1 on a pair of pins 9 which are in screw-threaded engagement with the clamping rail and which extend through bores 19 in the platen 1. The rear ends of the pins 9 project from the rear face 22 of the platen 1 and carry manually actuable clamping means 30 comprising respective clamp levers 7. The clamp levers are secured to the respective pins 9 through co-operating conventional nut and socket portions, well known per se, so that rotation of the lever 7 causes axial movement of the pin 9. A thrust pad 21 is disposed between the rear face 22 of the platen 1 and each clamp lever 7. A compression spring 10 is arranged on the pin 9 to urge the clamping rail 5 in the direction of the arrow X of Figure 4, that is away from the platen.

The mould 11 for mounting on the platen 1 is secured to or formed integrally with coupling means in the form of a plate-like attachment 12 to the top of which is fixed a flange-like member 13 formed with a downwardly extending flange 23 which defines a slot or groove 14 between the attachment 12 and the flange 23. The bottom edge of the member 12 is shaped to define a horizontal dovetail slot 16. A plate 17 which is of a thickness similar to that of the member 12 is secured to the mould 11 at a position below the member 12, simply as a packing piece.

The mould 11 is mounted on the platen 1 by locating the flange 23 of the member 13 in the groove 3 of the platen so that the mould hangs on the platen under gravity, after which the mould assembly is slid along the groove 3 in the platen to align corresponding index marks 28 and 29 on the mould and platen respectively, whereupon the detent pins 4 locate in corresponding holes 15 in the member 13. This sliding movement will also cause the dovetail slot 6 of the clamp rail 5 to engage the dovetail slot 16 of the member 12. As an additional security measure, the mould and platen are locked together by means of one or more index plungers 24, the cylindrical ends 26 of which engage in corresponding cylindrical bores 27 in the mould. In conventional fashion the plungers can be retracted and advanced by manual actuation of their heads 25. The mould is then finally fixed to the platen by rotation of the clamp lever 7 on the pin 9 so that the clamp rail moves towards the platen 1 and in so doing forces the mould firmly into contact with the face 18 of the platen.

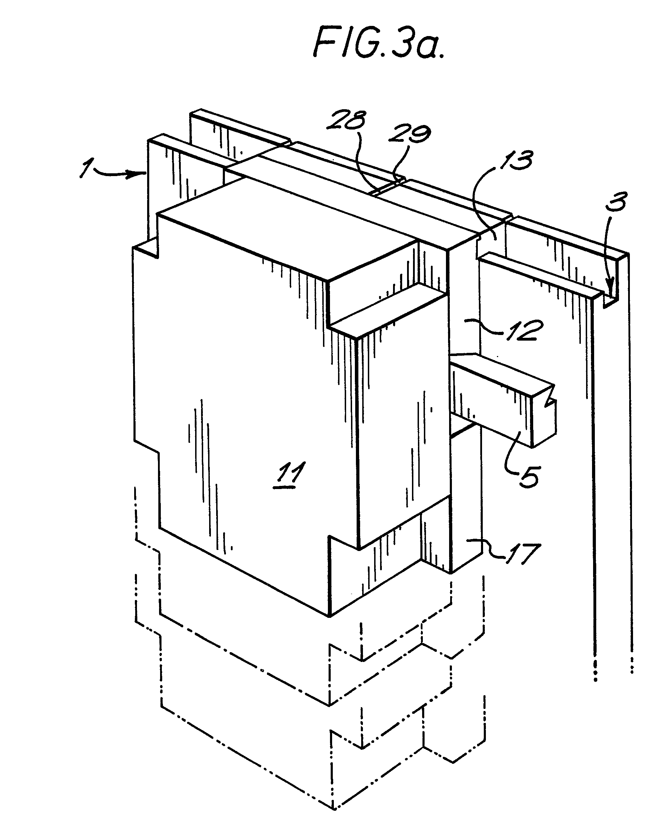

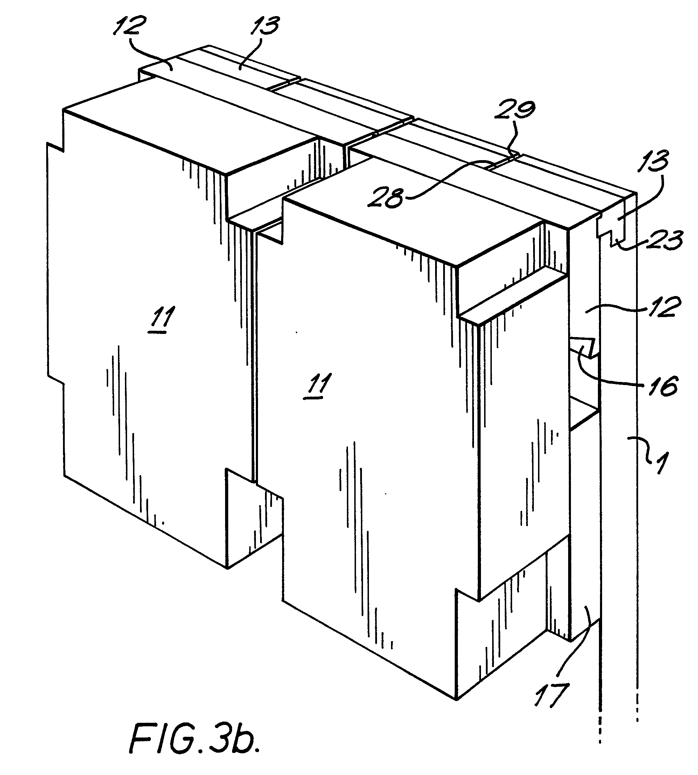

Figures 3a and 3b show how the invention can be applied to single and double moulds respectively.

It will be appreciated that the invention can readily be modified for use in connection with horizontal platens and that the invention is not limited to use in connection with blow moulding machinery but is equally applicable to injection moulding apparatus, vacuum forming apparatus and so on.

The invention provides a simple means for clamping machine tools such as moulds to their associated machine platens and which permits the machine tools to be readily located on the platen and to be quickly detached therefrom, without the use of separable pieces such as bolts and without the use of spanners all of which are liable to be lost or, perhaps worse, dropped into the machinery.

## Claims

1. The combination of a machine tool (11), a machine platen (1), and coupling means for releasably fixing the machine tool to the machine platen, characterised in that one straight edge (2) of the platen (1) is made to form a tool locating means, and characterised by means (13) on the tool for engagement with the tool locating edge (2) of the platen whereby the tool can be located on the platen, a member (12) rigidly fixed on, or integral with, the tool and defining a slot (16), a member (5) on the platen and arranged for engagement in the slot (16), and manually operable clamping means (30) on the platen and operatively coupled to the member (5) for drawing the member towards the platen to force the tool firmly into contact with the platen.

2. The combination of claim 1, characterised by a groove (3) along the said one edge (2) of the platen, and means (23) on the tool for engagement in the groove.

3. The combination of claim 2, characterised by an index mark (28) on the engagement means (13) of the tool, and by a corresponding index mark (29) on the said one edge (2) of the platen whereby the tool can be aligned on the platen.

4. The combination of claim 2 or claim 3, characterised in that the machine platen (1) is disposed with its face (18) vertical, and in that the groove (3) is disposed in the top edge of the platen, whereby the tool (11) can be hung under gravity on the platen.

5. The combination of any one of claims 2 to 4, characterised by a locating pin (4) on the platen and arranged to project into the groove (3) for engagement in a corresponding recess (15) in the machine tool to locate the machine tool on the platen.

6. The combination of claim 5, characterised in that the locating pin (4) is in the form of spring loaded plunger.

7. The combination of any preceding claim, characterised by an index plunger (24) on the platen and arranged to project from the face (18) of the platen and a corresponding recess (27) on the tool whereby the plunger (24) can engage in the recess (27) in the tool to locate the tool on the platen.

8. The combination of any preceding claim, characterised in that the slot (16) is a dovetail slot.

9. The combination of claim 8, characterised in that the engagement member (5) is formed with a dovetail slot (6) corresponding to the dovetail slot (16) in the tool.

10. The combination of any preceding claim, characterised in that the clamping means (30) is actuated by a manually operatable lever (7).

**FIG.1.**

FIG.2.

11

13

28

14

12

23

15

27

16

17

FIG.4.

12

18

1

30

X

5

21

22

17

10

19

9

7

## FIG.3a.

FIG.3b.